# EUROPÄISCHE PATENTANMELDUNG

(11) **EP 0 766 048 A1**
(43) Veröffentlichungstag der Anmeldung: **02.04.1997**
(21) Anmeldenummer: 96810635.1
(22) Anmeldetag: 26.09.1996
(51) Int. Cl.: F24D 5/12, F24H 9/02

(54) **Haustechnische Einrichtung, insbesondere für ein Niedrigenergiehaus**

(30) Priorität: 27.09.1995 CH 2727/95
(71) Anmelder: Sintro Electronics AG, 3800 Interlaken (CH)
(72) Erfinder: Schärz, Oskar, 3800 Unterseen (CH)
(74) Vertreter: BOVARD AG - Patentanwälte

(57) **Zusammenfassung**

Eine haustechnische Einrichtung, insbesondere für ein Niedrigenergiehaus, weist eine Lüftungszentrale (10) mit einer Aussenluftansaugleitung (12), einer Abluftleitung (14) sowie mehrere Wärmetauscher (20, 22, 24, 28), die teils Teile einer Wärmepumpe (22, 24, 26, 28) sind, auf. Eine Warmwasseraufbereitungsanlage (46) mit Warmwasserspeichern (48, 50) sowie ein Warm- und Kaltwasserverteiler (52, 54) ergänzen die haustechnische Einrichtung. Ebenfalls sind ein Elektrohauptverteiler (56) sowie eine Einheit (58) zum Steuern der haustechnischen Einrichtung vorhanden. Alle die genannten Teile der haustechnischen Einrichtung sind als Funktionsblöcke (10, 46, 52, 54, 56, 58) kompakt zusammengefasst und unmittelbar nebeneinander und/oder übereinanderliegend, vorzugsweise in einem Schrank einer Küchenkombination angeordnet.

## Beschreibung

Die vorliegende Erfindung bezieht sich auf eine haustechnische Einrichtung, insbesondere für ein Niedrigenergiehaus, mit einer Lüftungszentrale mit einer Aussenluftansaugleitung, einer Abluftleitung, mindestens einem Wärmetauscher und einer Wärmepumpe, welche letzteren auf die genannten Leitungen einwirken, mit einer Warmwasseraufbereitungsanlage mit Warmwasserspeicher, mit einem Warm- und Kaltwasserverteiler, mit einem Elektrohauptverteiler sowie mit einer Einheit zum Steuern der Einrichtung.

Bei einem konventionellen Haus sind die haustechnischen Einrichtungen üblicherweise räumlich voneinander getrennt. So sind für die Heizanlage ein Heizkessel mit einem Ölbrenner sowie ein Heizöltank vorwiegend in einem Kellergeschoss eines Hauses untergebracht. In dem Heizkessel ist meistens ein Warmwasserboiler integriert. Die Heizverteilung sowie die Kalt- und Warmwasserverteilung sind oftmals aufgeteilt in eine ebenfalls im Kellergeschoss angeordnete Hauptverteilung und in eine Feinverteilung pro Etage. An einem anderen Ort, vorzugsweise im Treppenhaus oder beim Hauseingang, befindet sich ein Elektrohauptverteiler. Die Feinverteilungen der elektrischen Energie erfolgt meistens pro Etage.

Durch eine derartige Installationsart muss in einem Haus entsprechend Raum vorgesehen sein. Dieser zusätzliche Raum verteuert die Gebäudekosten. Durch die dezentralisierte Installation der verschiedenen haustechnischen Einrichtungen werden ebenfalls die Installationskosten relativ teuer. Zudem entstehen durch oftmals lange Warmwasserleitungen und elektrische Leitungen zusätzliche Energieverluste sowie durch die letztgenannten Leitungen elektromagnetische Felder, die heutzutage nicht mehr ganz unumstritten sind. Hohe Baukosten und ein hoher Energieverbrauch wirken sich nachteilig auf die Gebäudeerstellung und auf den Gebäudebetrieb aus.

Die vorliegende Erfindung hat zum Ziel, eine haustechnische Einrichtung, insbesondere für ein Niedrigenergiehaus vorzuschlagen, mit der die vorgenannten Nachteile vermieden werden können.

Erreicht wird dies mit einer haustechnischen Einrichtung, insbesondere für ein Niedrigenergiehaus, gemäss der eingangs genannten Definition, die sich dadurch auszeichnet, dass alle die genannten Einrichtungsteile im wesentlichen als Funktionsblöcke zusammengefasst unmittelbar nebeneinander- und/oder übereinanderliegend angeordnet sind.

Ein Niedrigenergiehaus ist isolationsmässig so konzipiert, dass die Energieverluste derart klein sind, dass zur Aufrechterhaltung einer Raumtemperatur von etwa 20 ° C wesentlich weniger Heizenergie benötigt wird. So kann durch eine Rundumisolation die sonst bei einem Zweifamilienhaus oder einem grösseren Einfamilienhaus etwa benötigte Heizleistung von 15 kW auf ca. 3 kW reduziert werden. Zum Aufbringen einer derartig geringen Heizleistung ist eine teure, raumintensive Ölzentralheizung nicht mehr notwendig. Durch das Wegfallen der Räume für den Öltank und den Heizkessel können einerseits Einsparungen gemacht werden, die andererseits dazu benutzt werden können, um die geforderte Rundumisolation des Gebäudes zu erstellen.

Bei einem Niedrigenergiehaus erfolgt das Belüften üblicherweise nicht mehr durch das Öffnen von Fenstern. Dadurch würde die in der warmen Raumluft gespeicherte Energie ungenutzt aus dem Haus entweichen. Zum ständigen Erneuern der Raumluft ist deshalb eine Lüftungsanlage mit einer Lüftungszentrale vorgesehen. In der letzteren wird mittels einem Wärmetauscher der über eine Abluftleitung aus dem Gebäude entweichenden Raumluft ein Teil der Wärme entzogen und auf die Aussenluft, die über eine Aussenluftansaugleitung in das Haus gelangt, übertragen. Mit einer zusätzlich installierten Wärmepumpe kann der entweichenden Raumluft noch mehr Wärme entzogen werden. Es gelingt dadurch mit einem relativ bescheidenen elektrischen Energieaufwand, der zum Betreiben der Wärmepumpe erforderlich ist, eine Raumtemperatur von etwa 20 ° C im Gehäudeinnern aufrechtzuerhalten.

Insbesondere durch den Wegfall der raumintensiven, mit Öl betriebenen Heiz- und Warmwasseraufbereitungsanlage können bei einem Niedrigenergiehaus die eingangs genannten Einrichtungsteile der haustechnischen Einrichtung volumenmässig derart reduziert werden, dass sie alle unmittelbar neben- und/oder übereinanderliegend, angeordnet werden können, vorzugsweise sind sie zu einem einzigen Haustechnikmodul zusammengefasst. Das Haustechnikmodul kann vorteilhafterweise in einem Schrank, vorzugsweise in einem Normschrank einer Küchenkombination untergebracht sein. Dadurch entfallen teure Gebäudeinstallationen. Warmwasser- und elektrische Zuleitungen an die Hauptverbraucher eines Gebäudes, insbesondere an die Verbraucher der Küche, sind extrem kurz. Nennenswerte Zuleitungsverluste treten somit nicht auf.

In einem Mehrfamilienhaus könnte ein erfindungsgemässes Haustechnikmodul, beispielsweise pro Wohnung vorgesehen sein. Aufwendige Installationen sowie Aufteilung des Gesamtenergieverbrauches auf die einzelnen Wohnungen durch Messung, Berechnung und Abrechnung der individuellen Energiekosten würden dadurch entfallen.

Für grosse Wohnungen oder in einem Einfamilienhaus könnte ein zweites, im Umfang reduziertes Haustechnikmodul lediglich dafür vorgesehen sein, um die Schlafräume, die üblicherweise eine niedrigere Temperatur aufweisen als die Wohnräume, zu beheizen und zu belüften.

Sowohl in der Abluftleitung als auch in der Aussenluftansaugleitung, die mit dem Wärmetauscher und der Wärmepumpe der Lüftungszentrale in Verbindung stehen, sind Ventilatoren angeordnet, deren Ventilationswirkung beispielsweise durch Einstellen der Drehzahl geändert werden kann. Damit kann ein Cheminéeofen ohne Kaltluftanschluss betrieben werden. Es ist lediglich erforderlich, dass der Ventilator in der Abluftleitung ein wenig gedrosselt wird und die Wirkung des Ventilators in der Aussenluftansaugleitung unter Umständen etwas erhöht wird. Der dadurch erzeugte, leichte Überdruck im Gebäudeinnern reicht auch, dass die Rauchgase des Cheminéeofens durch den mit dem Cheminéeofen verbundenen Kamin entweichen.

Die Raumtemperatur kann mit einem Temperaturfühler geregelt werden, welcher vorzugsweise in der Abluftleitung, im Haustechnikmodul selbst angeordnet ist. Eine spezielle Installation dazu entfällt.

Im erfindungsgemässen Haustechnikmodul ist ebenfalls eine Steuereinheit angeordnet, womit die einzelnen Funktionsblöcke der haustechnischen Einrichtung zentral steuerbar sind. So ergehen beispielsweise Signale zum Aufrechterhalten einer eingestellten Raumtemperatur, einer gewünschten Warmwassertemperatur etc. ab dieser Steuereinheit. Es können ebenfalls Mittel vorgesehen sein, die ein Umschalten der Lüftungszentrale von einem Heizbetrieb auf einen Kühlbetrieb erlauben. Wenn beispielsweise im Sommer die Aussentemperatur wärmer ist als die eingestellte Raumtemperatur, können die Wärmetauscher, die mit dem Kompressor der Wärmepumpe in Verbindung stehen, durch die Steuereinheit derart umgeschaltet werden, dass die über die Aussenluftansaugleitung geführte Luft gegenüber der Abluft nicht geheizt sondern gekühlt wird.

Anhand von Figuren ist das erfindungsgemässe Haustechnikmodul im folgenden beispielsweise näher beschrieben. Es zeigen
Fig. 1 eine schematische Darstellung einer zu einem einzigen Haustechnikmodul zusammengefassten haustechnischen Einrichtung,
Fig. 2 das Haustechnikmodul gemäss der Fig. 1 mit den einzelnen zusammengefassten Einrichtungsteilen in einer perspektivischen Darstellung, und
Fig. 3 die Möglichkeit der Anordnung des Haustechnikmodules gemäss den Fig. 1 und 2 in einer Küchenkombination.

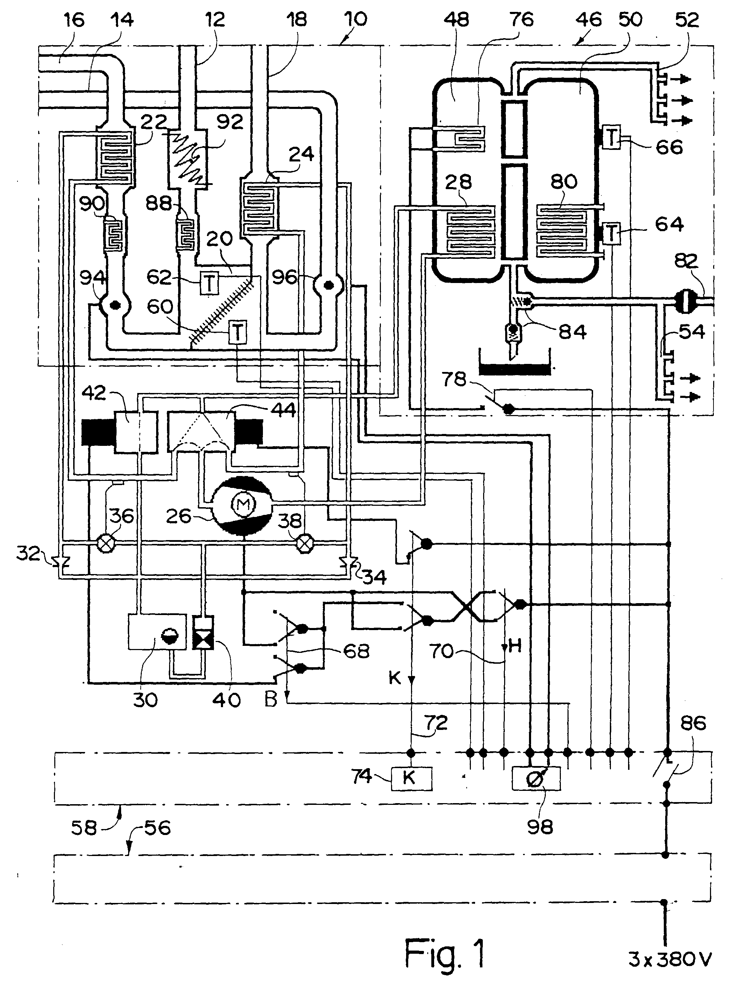

In der schematischen Darstellung der Fig. 1 ist eine haustechnische Einrichtung dargestellt, insbesondere sind die verschiedenen Einrichtungsteile eines erfindungsgemässen Haustechnikmodules, funktionsmässig zusammengefasst, gezeigt. Mit dem Bezugszeichen 10 ist eine Lüftungszentrale bezeichnet, die eine Aussenluftansaugleitung 12 aufweist, durch die mit einem ersten Ventilator 94 Umgebungsluft von ausserhalb dem Gebäude angesaugt, über einen Elektrofilter 92 geleitet, und einem ersten Wärmetauscher 20 zugeführt wird. Als Elektrofilter kann ein Feinfilter eingesetzt werden, mit welchem extrem kleine Partikel, wie beispielsweise für Allergiker schädliche Pollen, ausgefiltert werden können.

Im ersten Wärmetauscher 20 erfährt die Aussenluft eine erste Erwärmung oder Abkühlung, je nachdem ob sie wärmer oder kälter ist als die im Gebäudeinnern üblicherweise auf einer Temperatur von etwa 20 ° C gehaltene Raumluft. Die Aussenluft gelangt dann durch den bereits genannten Ventilator 94 über einen zweiten Wärmetauscher 22 an eine Zuluftverteilleitung 16, welche sich zu den gebäudeinternen Lüftungsverteilleitungen erstreckt. Die Abluft vom Gebäudeinnern wird zu einer Abluftleitung 14 gesammelt, dort durch einen zweiten Ventilator 96 angesaugt und über den bereits genannten ersten Wärmetauscher 20 geführt. Von dort gelangt die Luft über einen dritten Wärmetauscher 24 zu einer Fortluftleitung 18, welche die Abluft aus dem Gebäudeinnern an die Umgebung abgibt. Der zweite und der dritte Wärmetauscher 22, 24 sind Bestandteile einer Wärmepumpe und können je nachdem ob die Zuluft mit Wärme, die der Abluft entnommen worden ist, weiter aufgeheizt werden soll oder ob die Zuluft mit Wärme, die dieser entzogen wird, gekühlt werden soll, entweder als Kondensator oder als Verdampfer der Wärmepumpe wirken. Notfalls, insbesondere jedoch für den Anlaufbetrieb, ist in die Aussenluftansaugleitung 12 ein elektrisch betriebener Luftvorwärmer 88 geschaltet, und in der Zuluftverteilleitung 16 ist ein elektrisch betriebener Luftnachwärmer 90 angeordnet. In der Lüftungszentrale 10 sind im weiteren zwei Temperaturfühler 60, 62, vorhanden. Mit einem ersten Temperaturfühler 60 wird die Temperatur der Abluft gemessen und mit einem zweiten Temperaturfühler 62 wird die Temperatur der Zuluft festgestellt. Die von den genannten Fühlern gemessenen Werte werden als elektrische Signale über nicht näher bezeichnete elektrische Leitungen einer Steuereinheit 58 zugeführt und dort insbesondere zum Steuern der Wärmepumpe, bzw. zum Regeln der Raumlufttemperatur, verwendet.

Die Lüftungszentrale 10 dient, wie bereits einleitend gesagt, zum ständigen Erneuern der Raumluft im Gebäudeinnern anstelle des Lüftens durch Öffnen der Fenster bei einem konventionellen Haus. Das Ziel dieser Art Lufterneuerung ist, die in der Abluft gespeicherte Wärmeenergie nicht ungenutzt an die Aussenluft abzugeben.

Mit dem Bezugszeichen 46 ist eine Warmwasseraufbereitungsanlage bezeichnet. Diese umfasst einen ersten Warmwasserspeicher 48 und einen zweiten Warmwasserspeicher 50. Die beiden Warmwasserspeicher sind untereinander mittels mehreren Rohren, die nicht näher bezeichnet sind, verbunden, so dass durch eine natürliche Strömung eine Warmwasserzirkulation zwischen den beiden Warmwasserspeichern 48, 50 stattfinden kann. Mit dem ersten Warmwasserspeicher 48 wirkt ein vierter Wärmetauscher 28 zusammen, der ebenfalls Teil der Wärmepumpe ist, und zur Aufgabe hat, das durch eine Motor/Kompressoreinheit 26 der Wärmepumpe komprimierte gasförmige Arbeitsmedium, das sich auf einem hohen Temperaturniveau befindet, abzukühlen und dabei das Wasser in den Warmwasserspeichern zu erwärmen. Je nach der Temperatur des Wassers in den Warmwasserspeichern erfolgt im vierten Wärmetauscher 28 bereits eine Kondensation des Arbeitsmediums der Wärmepumpe oder lediglich eine Abkühlung des gasförmigen Arbeitsmediums.

Über einen Kaltwasseranschluss 82 wird den Warmwasserspeichern 48, 50 bei Bedarf kaltes, aufzuheizendes Wasser von unten zugeführt. Das erwärmte Wasser wird an der Oberseite der Speicher entnommen und über eine Leitung zu einer Warmwasserverteilung 52 geleitet. Von dort gelangt das warme Wasser zu den einzelnen Verbrauchern im Gebäude. Eine mit 54 bezeichnete Kaltwasserverteilung geht unmittelbar nach einem nicht näher bezeichneten Haupthahn beim Kaltwasseranschluss 82 ab. Vom Kaltwasserverteiler 54 aus werden die einzelnen Verbraucher im Gebäude mit Kaltwasser gespeist.

Mit 84 sind zwei Rückschlagventile bezeichnet, welche dafür sorgen, dass durch das Aufwärmen des Wassers in den Warmwasserspeichern 48, 50 ein allfällig entstehender Überdruck nicht auf das Wasserversorgungsnetz zurückwirkt oder zu den einzelnen Warmwasserverbrauchern gelangen kann, sondern einer nicht näher bezeichneten Wasserabflussleitung zugeführt wird.

Im zweiten Warmwasserspeicher 50 ist ein weiteres Heizorgan 80 vorgesehen, welches bei Bedarf mit einem Sonnenkollektor verbunden werden kann. Zwei Temperaturfühler 64, 66 sind in den Warmwasserspeichern angeordnet. Ein erster Temperaturfühler 64 misst die Warmwassertemperatur im unteren Warmwasserspeicherbereich und ein zweiter Temperaturfühler 66 misst die Warmwassertemperatur in einem oberen Bereich der Warmwasserspeicher. Die von den beiden Temperaturfühlern abgegebenen elektrischen Signale werden über ebenfalls nicht näher bezeichnete elektrische Leitungen der bereits genannten Steuereinheit 58 zugeführt. Das Signal des unteren, ersten Temperaturfühlers 64 wird dort insbesondere dazu verwendet, bei genügend hochstehender Temperatur des warmen Wassers die Wärmepumpe bei einem "Nur-Boilerbetrieb" auszuschalten. Der zweite, obere Temperaturfühler 66 erzeugt ein Signal, mit welchem eine elektrisch gespiesene Zusatzheizung 76 im ersten Warmwasserspeicher 48 über eine Schalteinrichtung 78 eingeschaltet werden kann. Dies nur dann, wenn die Temperatur des warmen Wassers im oberen Warmwasserspeicherbereich zu tief ist und die Wirkung der Wärmepumpe offensichtlich nicht ausreicht, um auch dort das Wasser genügend aufzuheizen.

Die Funktionsweise der Wärmepumpe wird im Folgenden weiter erklärt. Beim Einschalten der Einrichtung sei in den Warmwasserspeichern 48, 50 lediglich kaltes Wasser vorhanden. Im weiteren sei angenommen, dass die Raumtemperatur zu tief sei und die Raumluft im Gebäudeinnern geheizt werden soll. Die zu tiefe Raumlufttemperatur wird durch den ersten Temperaturfühler 60 im ersten Wärmetauscher 20 der Lüftungszentrale 10 festgestellt. Die Steuereinheit 58 aktiviert einen Raumtemperaturregler 70, welcher seinerseits mit einem ersten elektrischen Kontakt die Motor/-Kompressoreinheit 26 der Wärmepumpe einschaltet. Das dadurch komprimierte Arbeitsmedium der Wärmepumpe gelangt über den vierten Wärmetauscher 28 im ersten Warmwasserspeicher 48 und gibt dort einen Teil seiner Wärmeenergie ab. Das noch gasförmige Arbeitsmedium gelangt dann über den punktiert eingezeichneten Pfad eines in diesem Fall nicht aktiven zweiten Ventiles 44 zum zweiten Wärmetauscher 22 in der Zuluftverteilleitung 16. Das Arbeitsmedium der Wärmepumpe wird dort unter Abgabe von weiterer Wärmeenergie an die Zuluft verflüssigt und gelangt anschliessend über ein erstes Regelventil 32 in einen Sammelbehälter 30, dann durch ein Filter 40 und durch ein zweites Expansionsventil 38 zum dritten Wärmetauscher 24. Dort wird das Arbeitsmedium der Wärmepumpe unter Entnahme einer Restwärme aus der Abluft verdampft und gelangt über den gestrichelt eingezeichneten Pfad des zweiten Ventiles 44 wiederum zur Motor/Kompressoreinheit 26. Der Raumtemperaturregler 70 schaltet die Wärmepumpe aus, wenn die gewünschte Raumtemperatur erreicht ist, welche, wie gesagt, durch den ersten Temperaturfühler 60, der im ersten Wärmetauscher 20 auf der Abluftseite angeordnet ist, gemessen wird.

Wenn das Wasser in den Warmwasserspeichern 48, 50 seine Solltemperatur noch nicht erreicht hat, was insbesondere durch den ersten unteren Temperaturfühler 64 festgestellt wird, so bewirkt dieser ein Einschalten eines mit 68 bezeichneten Temperaturbegrenzungsschalters. Dieser setzt dann, wenn die Raumtemperatur erreicht ist (Raumtemperaturregler 70 nicht aktiv) und wenn ein mit 72 bezeichneter Heizkühlumschalter nicht auf der Stellung Kühlen steht, die Motor/Kompressoreinheit 26 der Wärmepumpe wieder in Betrieb, bzw. hält im beschriebenen Fall den Betrieb der Wärmepumpe aufrecht und öffnet ein erstes Ventil 42. Das durch die Motor/Kompressoreinheit 26 komprimierte gasförmige Arbeitsmedium der Wärmepumpe gelangt auf dem hohen Temperaturniveau durch den vierten Wärmetauscher 28 im ersten Warmwasserspeicher 48 und wird dort unter gleichzeitiger Abgabe eines Teiles seiner Wärmeenergie zumindest teilweise verflüssigt. Das Arbeitsmedium gelangt dann durch das geöffnete erste Ventil 42 in den Sammelbehälter 30. Das erste Ventil 42 bildet dabei einen Nebenschluss zum zweiten Ventil 44 und zu einem der beiden Wärmetauscher 22, 24 in der Lüftungszentrale 10, je nachdem, ob das zweite Ventil 44 auf Heizbetrieb oder Kühlbetrieb geschaltet ist. Beim vorhin angenommenen Heizbetrieb ist der zweite Wärmetauscher 22 in der Zuluftverteilleitung durch das geöffnete erste Ventil 42 kurzgeschlossen. Das Arbeitsmedium der Wärmepumpe gelangt vom Sammelbehälter 30 über den Filter 40 durch das zweite Expansionsventil 38 zu dem in der Fortluftleitung 18 angeordneten dritten Wärmetauscher 24. Dieser wirkt in dieser Phase als Verdampfer und entzieht die zum Verdampfen des Arbeitsmediums benötigte Energie als Wärme aus der Abluft. Das entspannte, wiederum gasförmige Arbeitsmedium der Wärmepumpe gelangt dann durch das immer noch passive zweite Ventil 44 (gestrichelt eingezeichneter Pfad) hindurch wiederum zur Motor/Kompressoreinheit 26.

Wenn das Wasser in den Warmwasserspeichern 48, 50 die gewünschte Solltemperatur erreicht hat, wird der Temperaturbegrenzungsschalter 68, gesteuert durch den ersten unteren Temperaturfühler 64 passiv und schaltet den "Nur-Boilerbetrieb" aus. Das erste Ventil 42 wird in den Sperrzustand geschaltet.

Das beispielsweise gezeigte Haustechnikmodul sieht ebenfalls ein Kühlen der Raumluft vor. Obschon mit der Steuereinheit 58 eine eingestellte Raumluftsolltemperatur aufrecht erhalten werden könnte, indem bei Bedarf automatisch von einem Heizbetrieb auf einen Kühlbetrieb umgeschaltet würde, ist in der Fig. 1 ein manuell einschaltbarer Kühlbetrieb vorgesehen. Mit einem manuell betätigbaren Schalter 74 wird ein Heizkühlumschalter 72 aktiviert. Bei ausgeschaltetem Heizbetrieb (der Raumtemperaturregler 70 ist passiv) wird die Wärmepumpe durch das Einschalten der Motor/Kompressoreinheit 26 wiederum in Gang gesetzt. Das zweite Ventil 44 wird aktiv. Das komprimierte Arbeitsmedium wird zuerst wiederum über den vierten Wärmetauscher 28 des ersten Wärmespeichers 48 geführt und gibt dort einen bestimmten Teil seiner Wärmeenergie an das Wasser ab. Das Arbeitsmedium gelangt über den strichpunktierten Pfad des zweiten Ventiles 44 zum dritten Wärmetauscher 24, der in der Fortluftleitung 18 angeordnet ist. Das Arbeitsmedium wird dort unter Abgabe von weiterer Wärmeenergie an die Abluft verflüssigt und gelangt anschliessend über ein zweites Regelventil 34 in den Sammelbehälter 30, dann durch das Filter 40, ein erstes Expansionsventil 36, zum zweiten Wärmetauscher 22 in der Zuluftverteilleitung. Dort wird das Arbeitsmedium unter Entnahme von Wärmeenergie aus der Zuluft verdampft und gelangt anschliessend über den weiteren strichpunktiert gezeichneten Pfad des zweiten Ventiles 44 wieder zur Motor/Kompressoreinheit 26.

Das Bezugszeichen 86 deutet einen Hauptschalter an, mit dem die elektrische Energie für das ganze Haustechnikmodul ein- oder ausgeschaltet werden kann. Mit dem Bezugszeichen 98 sind Drehzahlregler bezeichnet, mit denen die Ventilationswirkung der beiden Ventilatoren 94, 96 durch eine unabhängige Veränderung der Drehzahl verändert werden kann.

Ebenfalls im Haustechnikmodul vorhanden ist ein Elektrohauptverteiler, wie dies mit dem Block, der mit dem Bezugszeichen 56 bezeichnet ist, lediglich angedeutet ist.

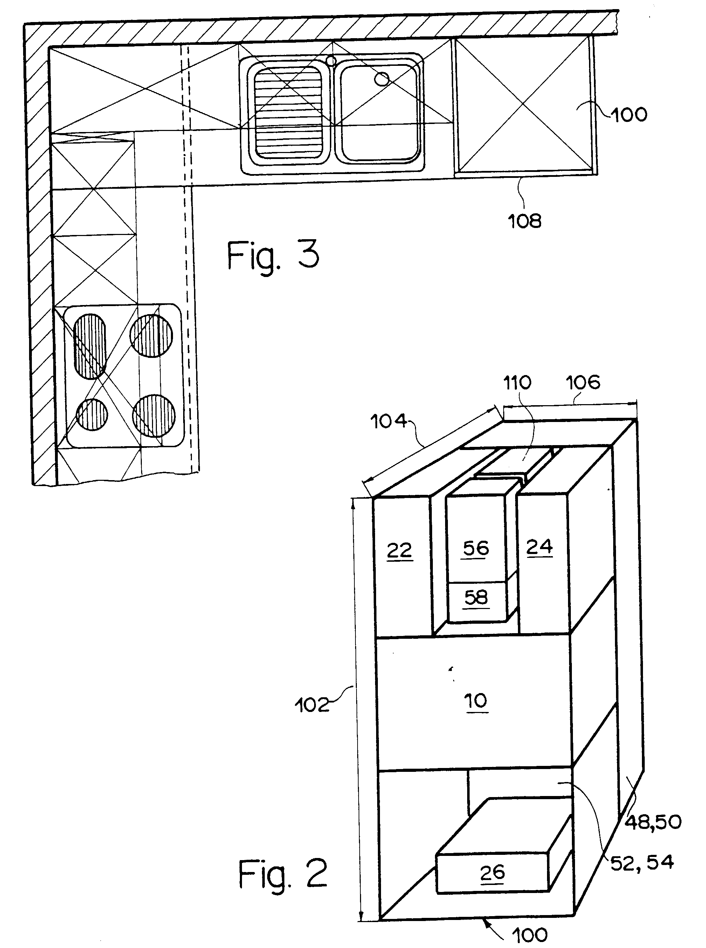

Die Fig. 2 zeigt eine bevorzugte räumliche Anordnung der einzelnen Teile der haustechnischen Einrichtung. Die beiden Warmwasserspeicher 48, 50 sind in einem rückwärtigen Bereich nebeneinanderliegend angeordnet. Die Lüftungszentrale 10 befindet sich vor den beiden genannten Wärmespeichern und belegt etwa ein mittleres Drittel der Gesamthöhe des erfindungsgemässen Haustechnikmodules, das allgemein mit dem Bezugszeichen 100 bezeichnet ist. Unterhalb der Lüftungszentrale 10 befindet sich die Motor/Kompressor-einheit 26 sowie der Kaltwasserverteiler 52 und der Warmwasserverteiler 54. Oberhalb der Lüftungszentrale 10 sind die beiden Wärmetauscher 22, 24, die in der Zuluft- bzw. Fortluftleitung angeordnet sind, untergebracht. Der Elektrohauptverteiler 56 und die Steuereinheit 58 befinden sich oberhalb der Lüftungszentrale 10 zwischen den beiden genannten Wärmepumpen 22, 24. Die restlichen Teile der Wärmepumpe, wie die genannten Regelventile, die Expansionsventile, die Ventile zum Umschalten der verschiedenen Funktionen, wie Aufheizen des Boilerwassers, Heizen der Raumluft und Kühlen der Raum-luft, das Filter sowie der Sammelbehälter sind in einem Funktionsblock untergebracht, der allgemein mit dem Bezugszeichen 110 bezeichnet ist.

Durch das unmittelbare Neben- oder Übereinanderanordnen der einzelnen zu Funktionsblöcken zusammengefassten Teile der haustechnischen Einrichtung wird ein kompaktes Haustechnikmodul erreicht, das eine Höhe 102 von lediglich etwa 200 cm, eine Tiefe 104 von lediglich etwa 60 cm und eine Breite 106 von ebenfalls lediglich etwa 60 cm hat. Dadurch ist ein solches Haustechnikmodul prädestiniert, um in einem Schrank, insbesondere einem Normschrank 108 einer Küchenkombination, wie dies in der Fig. 3 angedeutet ist, untergebracht zu werden. Die Hauptenergieverbraucher eines Haushaltes, die sich normalerweise in der Küche befinden, können auf diese Weise mit extrem kurzen Leitungen, seien es Wasser- oder elektrische Leitungen, versorgt werden.

Natürlich wäre es möglich, die einzelnen Funktionsblöcke des Haustechnikmodules auch anders zusammenzufassen. Es könnte beispielsweise vorgesehen sein, die Teile der Haustechnikeinrichtung so über- und nebeneinander anzuordnen, dass das Haustechnikmodul anstelle in einem einzigen Hochschrank in zwei Niedrigschränken, die unter der Abstellfläche einer Küchenkombination angeordnet sind, untergebracht wäre. Den verschiedenen Variationsmöglichkeiten sind hier keine Grenzen gesetzt.

## Patentansprüche

1. Haustechnische Einrichtung, insbesondere für ein Niedrigenergiehaus, mit einer Lüftungszentrale (10) mit einer Aussenluftansaugleitung (12), einer Abluftleitung (14), mindestens einem Wärmetauscher (20, 22, 24, 28) und einer Wärmepumpe (22, 24, 26, 28), welche letzteren auf die genannten Leitungen (12, 14) einwirken, mit einer Warmwasseraufbereitungsanlage (46) mit Warmwasserspeicher (48, 50), mit einem Warm- (52) und Kaltwasserverteiler (54), mit einem Elektrohauptverteiler (56), sowie mit einer Einheit (58) zum Steuern der Einrichtung, dadurch gekennzeichnet, dass alle die oben genannten Einrichtungsteile (10, 46, 52, 54, 56, 58) im wesentlichen als Funktionsblöcke (10, 46, 52, 54, 56, 58) zusammengefasst, unmittelbar nebeneinander und/oder übereinanderliegend angeordnet sind.

2. Einrichtung nach Anspruch 1, dadurch gekennzeichnet, dass die Funktionsblöcke (10, 46, 52, 54, 56, 58) zu einem einzigen Haustechnikmodul (100) zusammengefasst sind.

3. Einrichtung nach Anspruch 2, dadurch gekennzeichnet, dass das Haustechnikmodul (100) in einem einzigen Schrank (108), insbesondere einem Normschrank einer Küchenkombination untergebracht ist.

4. Einrichtung nach einem der Ansprüche 1 bis 3, dadurch gekennzeichnet, dass die Steuereinheit (58) und die Lüftungszentrale (10) Umschaltmittel (44, 72, 74, 76) aufweisen, womit die über die Aussenluftansaugleitung (12) geführte Luft gegenüber der durch die Abluftleitung (14) geführten Luft entweder geheizt oder gekühlt werden kann.

5. Einrichtung nach einem der Ansprüche 1 bis 4, dadurch gekennzeichnet, dass mindestens in der Abluftleitung (14) ein Temperaturfühler (60) vorhanden ist.

6. Einrichtung nach einem der Ansprüche 1 bis 5, dadurch gekennzeichnet, dass sowohl in der Aussenluftansaugleitung (12) als auch in der Abluftleitung (14) je ein Ventilator (94, 96) montiert ist, und dass die Steuereinheit (56) Mittel (98) zum getrennten Einstellen der Ventilationsstärke der Ventilatoren (94, 96) umfasst.
